# EUROPÄISCHE PATENTSCHRIFT

(11) **EP 1 799 474 B1**
(45) Veröffentlichungstag und Bekanntmachung des Hinweises auf die Patenterteilung: **08.12.2010**
(21) Anmeldenummer: 05782857.6
(22) Anmeldetag: 26.08.2005
(51) Int. Cl.: B60G 17/052, B60G 11/27, B60G 11/28, F16F 9/04, F16F 9/05, F16F 9/54

(54) **LUFTFEDERBEIN FÜR EIN KRAFTFAHRZEUG**
AIR SUSPENSION STRUT FOR A MOTOR VEHICLE
JAMBE ELASTIQUE A AIR POUR VEHICULE

(30) Priorität: 05.10.2004 DE 102004048420
(43) Veröffentlichungstag der Anmeldung: 27.06.2007
(73) Patentinhaber: Continental Aktiengesellschaft, 30165 Hannover (DE)
(72) Erfinder: GLEU, Jens-Uwe, 30855 Langenhagen (DE)
(74) Vertreter: Finger, Karsten
(86) Internationale Anmeldenummer: PCT/EP2005/009221
(87) Internationale Veröffentlichungsnummer: WO 2006/037405

(56) Entgegenhaltungen:
- EP-A- 1 239 181
- EP-A- 1 344 956
- EP-A- 1 344 957
- WO-A-95/18734
- DE-A1- 4 010 982
- DE-C1- 19 508 980
- US-A- 3 046 003
- US-A1- 2003 020 218

## Beschreibung

Die Erfindung betrifft ein Luftfederbein für ein Kraftfahrzeug, das folgende Bestandteile enthält:
- eine erste Luftfeder mit einem Balg, der auf einer ersten Abrollkontur in Form eines ersten Abrollkolbens abrollt und der an einem ersten Deckel befestigt ist,
- eine zweite Luftfeder mit einem Balg, der auf einer zweiten Abrollkontur abrollt und der an einem zweiten Deckel befestigt ist,
- ein erstes Verbindungselement, auf dem sich der erste Abrollkolben abstützt und über das der zweite Deckel starr mit dem ersten Abrollkolben verbunden ist,
- ein zweites Verbindungselement, über das der erste Deckel mit einer Radaufhängung eines Kraftfahrzeuges verbindbar ist.

Ein derartiges Luftfederbein ist beispielsweise aus der US 3,046,003 bekannt. Das aus dieser Druckschrift bekannte Luftfederbein wird zwischen der Radaufhängung und dem Aufbau eines Schienenfahrzeuges eingebaut. Das Luftfederbein enthält an Ende, das dem Aufbau des Schienenfahrzeuges zugewandt ist, ein erstes Kugelkopflager und am Ende des zweiten Verbindungselementes, das der Radaufhängung zugewandt ist, ein zweites Kugelkopflager. Die beiden Kugelkopflager ermöglichen es, dass das Luftfederbein relativ zu der Radaufhängung und relativ zu dem Aufbau des Schienenfahrzeuges verschwenkbar ist. Es ist jedoch festzustellen, dass die Verschwenkbarkeit des Luftfederbeines eingeschränkt ist, da innerhalb der Luftfedern des Luftfederbeines ein starres Verbindungselement verläuft, das den Abrollkolben der ersten Luftfeder mit dem Deckel der zweiten Luftfeder starr verbindet.

Aus EP 1 344 956 A1 ist ebenfalls ein Luftfederbein der eingangs genannten Art bekannt, bei dem die zweite Luftfeder oberhalb der ersten Luftfeder angeordnet ist und die erste Luftfeder die Abrollkontur der zweiten Luftfeder bildet. Das Luftfederbein wird zwischen der Radaufhängung und dem Fahrzeugaufbau eines Kraftfahrzeuges eingebaut. Hierzu ist das zweite Verbindungselement an seinem dem Luftfederbein abgewandten Ende mit einem Befestigungsauge versehen, über das das Luftfederbein mit der Radaufhängung verbunden werden kann. Durch die Verwendung des Befestigungsauges ist sichergestellt, dass das zweite Verbindungselement gegenüber der Längsachse des Luftfederbeines verschwenkbar ist, so dass die Radaufhängung gegenüber dem Fahrzeugaufbau Schwenkbewegungen vollführen kann. Hierbei ist ein großer Schwenkwinkel α möglich, da sowohl das erste Verbindungselement als auch das zweite Verbindungselement außerhalb der Luftfedern des Luftfederbeines verlaufen. Darüber hinaus hat sich gezeigt, dass bei der genannten Verschwenkung die radiale Verformung im Bereich der Abrollfalten der Bälge der Luftfedern gegenüber einem Luftfederbein, bei dem zumindest eines der Verbindungselemente innerhalb der Luftfedern verläuft, deutlich geringer ist. Es hat sich jedoch überraschenderweise gezeigt, dass auch bei einer Verschwenkung eines Luftfederbeines, wie es aus der EP 1 344 956 A1 bekannt ist, noch Belastungen auf die Bälge der Luftfedern einwirken, was die Lebensdauer der Bälge reduzieren kann.

Aus der DE 195 08 980 C1 ist ein Luftfederbein bekannt, dass eine Luftfeder und einen Stoßdämpfer enthält. Der Kolben des Stoßdämpfers ist gelenkig an dem Deckel der Luftfeder befestigt und der Zylinder des Stoßdämpfers wird über ein Befestigungsauge an der Radaufhängung eines Kraftfahrzeuges befestigt. Der Abrollkolben der Luftfeder stützt sich über ein Taumelgelenk auf dem Zylinder des Stoßdämpfers ab.

Der Erfindung liegt die Aufgabe zugrunde, ein Luftfederbein der eingangs genannten Art zu schaffen, bei dem die Bälge der Luftfedern während einer Verschwenkung des ersten Verbindungselementes gegenüber der Längsachse des Luftfederbeines möglichst wenig belastet werden.

Die Aufgabe wird durch die kennzeichnenden Merkmale des Anspruchs 1 gelöst.

Unter einem Taumelgelenk ist ein Gelenk zu verstehen, das eine Verschwenkbarkeit des ersten Verbindungselementes gegenüber der Längsachse des Luftfederbeines in zumindest einer Ebene zulässt. Das Taumelgelenk kann z. B. als Kugelkopfgelenk (das eine Verschwenkbarkeit in allen Ebenen zulässt) oder als Schaniergelenk (das eine Verschwenkbarkeit in nur einer Ebene zulässt) ausgebildet sein. Ein weiteres Ausführungsbeispiel für das Taumelgelenk wird im Zusammenhang mit den Figuren beschrieben.

Der mit der Erfindung erzielte Vorteil ist insbesondere darin zu sehen, dass bei einer Verschwenkung des ersten Verbindungselementes gegenüber der Längsachse des Luftfederbeines nur eine sehr geringe radiale Belastung in den Bälgen der Luftfeder auftreten. Dies begründet sich wie folgt: Bei der Verschwenkung des ersten Verbindungselementes kann der erste Abrollkolben der ersten Luftfeder im Rollfaltenbereich radial ausweichen, so dass der Balg der ersten Luftfeder kaum noch eine radiale Verformung erfährt. Ein weiterer Vorteil der Erfindung ist darin zu sehen, dass aufgrund des Taumelgelenkes, auf dem sich der erste Abrollkolben abstützt, auf eine gelenkige Anbindung des Luftfederbeines zum Fahrzeugaufbau eines Kraftfahrzeuges verzichtet werden kann. Ein weiterer Vorteil der Erfindung ist darin zu sehen, dass für das Taumelgelenk kein zusätzlicher Bauraum, der seitlich über den Abrollkolben der ersten Luftfeder hinausragt, vorgesehen zu werden braucht.

Gemäß einer Weiterbildung der Erfindung nach Anspruch 2 verläuft das erste Verbindungselement und das zweite Verbindungselement außerhalb der Luftfedern. Ein Vorteil dieser Weiterbildung ist darin zu sehen, dass keine Reibung zwischen den Verbindungselementen und den Bestandteilen der Luftfedern vorliegt. In dem Luftfederbein kommt es daher nicht zu störenden Geräuschen, die auf ein Losbrechen der Bestandteile der Luftfedern von den Verbindungselementen zurückzuführen sind. Ein weiterer Vorteil dieser Weiterbildung ist darin zu sehen, dass sie einen großen Verschwenkwinkel insbesondere des ersten Verbindungselementes zur Längsachse des Luftfederbeines zulässt.

Gemäß einer Weiterbildung der Erfindung nach Anspruch 3 enthält das Taumelgelenk ein Elastomerbauteil. Ein Vorteil dieser Weiterbildung ist darin zu sehen, dass ein als Elastomerbauteil ausgebildetes Taumelgelenk Anregungen mit kleinen Amplituden, die von der Radaufhängung eines Kraftfahrzeuges ausgehen, vom Fahrzeugaufbau des Kraftfahrzeuges entkoppeln kann. Das Elastomerbauteil übernimmt somit eine sogenannte "Antiharschness-Funktion", die von den Luftfedern nur eingeschränkt übernommen werden kann, da sich Luftfederbälge bei kleinen Amplituden steif verhalten und nur schwer abrollen.

Gemäß einer Weiterbildung der Erfindung nach Anspruch 4 ist das Taumelgelenk als Scheibe ausgebildet. Der Vorteil dieser Weiterbildung ist darin zu sehen, dass ein Taumelgelenk in Form einer Scheibe auf besonders einfache Art und Weise gefertigt werden kann.

Gemäß einer Weiterbildung der Erfindung nach Anspruch 5 weist die Scheibe die Form einer Kugelkalotte auf, deren Ausbuchtung dem ersten Verbindungselement zugewandt ist. Der Vorteil dieser Weiterbildung ist darin zu sehen, dass durch ein Taumelgelenk in Form einer Kugelkalotte auf einfache Art und Weise eine Taumelbeweglichkeit in allen Ebenen ermöglicht werden kann.

Gemäß einer Weiterbildung der Erfindung nach Anspruch 6 ist zwischen dem Taumelgelenk und dem ersten Abrollkolben ein Adapter angeordnet. Der Abrollkolben der ersten Luftfeder steht über dem Adapter mit dem Taumelgelenk in Verbindung. Der Vorteil dieser Weiterbildung ist darin sehen, dass für das erfindungsgemäße Luftfederbein herkömmliche Abrollkolben verwendet werden können, deren Form an dem Ende, das dem Taumelgelenk zugeordnet ist, nicht an dieses angepasst zu werden braucht. Diese Anpassung des Abrollkolbens an das Taumelgelenk wird vielmehr mit Hilfe des Adapters vorgenommen.

Gemäß einer Weiterbildung der Erfindung nach Anspruch 7 ist die zweite Abrollkontur der zweiten Luftfeder durch die erste Luftfeder vorgegeben. Der Vorteil dieser Weiterbildung ist darin zu sehen, dass auch der Balg der zweiten Luftfeder im Rollfaltenbereich kaum noch eine radiale Verformung erfährt, da die Abrollkontur der zweiten Luftfeder durch den Balg der ersten Luftfeder vorgegeben ist, der radial ausweichen kann.

Gemäß einer Weiterbildung der Erfindung nach Anspruch 8 steht der Innenraum der ersten Luftfeder mit dem Innenraum der zweiten Luftfeder über ein in zwei Richtungen durchströmbares Drosselorgan miteinander in Verbindung. Der Vorteil dieser Weiterbildung ist darin zu sehen, dass mit Hilfe des Luftfederbeines nicht nur eine Federung sondern auch eine Dämpfung realisiert werden kann.

Gemäß einer Weiterbildung der Erfindung nach Anspruch 9 wird das Taumelgelenk zwischen dem ersten Abrollkolben und dem ersten Verbindungselement ohne weitere Befestigung eingelegt. Der Vorteil dieser Weiterbilung ist darin zu sehen, dass für das Taumelgelenk, den ersten Abrollkolben und das erste Verbindungselement Materialien verwendet werden können, die nicht durch Vulkanisation etc. miteinander verbunden werden können.

Weitere Vorteile und ein Ausführungsbeispiel der Erfindung werden im Zusammenhang mit den nachstehenden Figuren erläutert, darin zeigt:
- Fig. 1: ein Luftfederbein,
- Fig. 2: ein Luftfederbein.

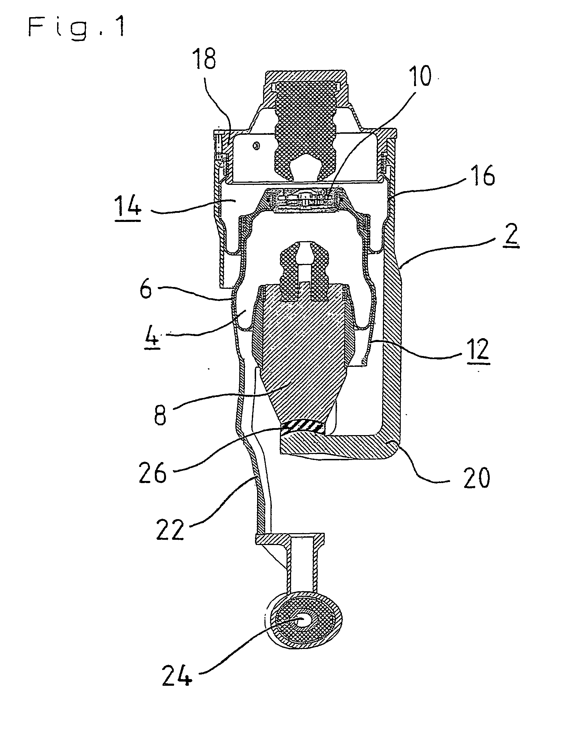

Figur 1 zeigt ein Luftfederbein 2 für ein Kraftfahrzeug in schematischer Darstellung. Ein derartiges Luftfederbein 2 ist grundsätzlich aus der EP 1 344 956 A1 bekannt, so dass im Folgenden nur kurz auf den grundsätzlichen Aufbau des Luftfederbeines 2 eingegangen weden soll. Das Luftfederbein 2 weist eine erste Luftfeder 4 mit einem Balg 6 auf, der einerseits auf einer ersten Abrollkontur in Form eines ersten Abrollkolbens 8 abrollt und der andererseits an einem Deckel 10 befestigt ist. Die erste Luftfeder 4 ist von einer Glocke 12 umgeben, die an ihrem oberen Ende an dem Deckel 10 befestigt ist.

Das Luftfederbein 2 weist ferner eine zweite Luftfeder 14 mit einem Balg 16 auf, dessen oberes Ende an einem zweiten Deckel 18 befestigt ist. Die zweite Luftfeder 14 ist oberhalb der ersten Luftfeder 4 angeordnet und rollt auf einer zweiten Abrollkontur ab, die durch die erste Luftfeder 4 vorgegeben ist. Dazu ist der Balg 16 der zweiten Luftfeder 14 an seinem unteren Ende unter Ausbildung einer Abrollfalte an der Glocke 12 befestigt, die die radiale Ausdehnung des Balges 6 der ersten Luftfeder 4 vorgibt.

Der erste Deckel 10 ist als Drosselorgan ausgebildet, das in beiden Richtungen von Luft durchströmbar ist. Der Innenraum der ersten Luftfeder 4 steht über das Drosselorgan in Form des ersten Deckels 10 mit dem Innenraum der zweiten Luftfeder 14 in Verbindung.

Neben den bisher genannten Bestandteilen weist das Luftfederbein 2 ein erstes starres Verbindungselement 20 auf, auf dem sich der erste Abrollkolben 8 der ersten Luftfeder 4 abstützt und über das der zweite Deckel 18 der zweiten Luftfeder 14 mit dem ersten Abrollkolben 8 verbunden ist. Ferner weist das Luftfederbein 2 ein zweites starres Verbindungselement 22 auf, das aus der Glocke 12 hervorgeht. Das zweite Verbindungselement 22 endet an seinem unteren Ende in einem Befestigungselement in Form eines Befestigungsauges 24, über das das Luftfederbein 2 mit einer (in der Figur 1 nicht gezeigten) Radaufhängung eines Kraftfahrzeuges verbindbar ist. An seinem oberen Ende wird das Luftfederbein 2 über den zweiten Deckel 18 starr mit dem Fahrzeugaufbau eines Kraftfahrzeuges verbunden. Die beiden Verbindungselemente verlaufen außerhalb der beiden Luftfedern 4, 14.

Der erste Abrollkolben 8 der ersten Luftfeder 4 stützt sich über ein Taumelgelenk 26 auf dem ersten Verbindungselement 20 ab. Das Taumelgelenk 26 ist vorzugsweise als Elastomerbauteil ausgebildet und weist die Form einer Kugelkalotte auf, deren Ausbuchtung dem ersten Verbindungselement 20 zugewandt ist, so wie es auch in der Figur 1 gezeigt ist. Das erste Verbindungselement 20 enthält in dem Bereich, wo sich der erste Abrollkolben 8 auf dem Verbindungselement 20 abstützt, eine Wölbung, die passgenau in die Ausbuchtung des kugelkalottenförmigen Taumelgelenkes 26 eingreift. Der erste Abrollkolben 8 enthält an seinem unteren Ende, das dem Taumelgelenk 26 und dem ersten Verbindungselement 20 zugewandt ist, eine Ausbuchtung, die der nach oben gerichteten Wölbung des kugelkalottenförmigen Taumelgelenkes 26 zugewandt ist und mit dieser kommuniziert. Das Taumelgelenk 26 liegt also passgenau zwischen dem ersten Abrollkolben 8 und dem ersten Verbindungselement 20 und ist raumsparend in den ersten Abrollkolben 8 integriert.

Zur Befestigung des Taumelgelenkes 26 zwischen dem ersten Abrollkolben 8 und dem ersten Verbindungselement 20 wird das Taumelgelenk 26 zwischen den genannten Bestandteilen des Luftfederbeines 2 eingelegt. Da zumindest im eingebauten Zustand des Luftfederbeines 2 der erste Abrollkolben 8 und das erste Verbindungselement 20 stets zueinander unter Druck stehen, erfordert eine derartige Kammerung keine weitere Befestigung des Taumelgelenkes 26.

Alternativ ist es bei diesem und anderen Ausführungsbeispielen möglich, das Taumelgelenk 26 zwischen dem ersten Abrollkolben 8 und dem ersten Verbindungselement 20 einzukleben bzw. an den genannten Bestandteilen anzuvulkanisieren.

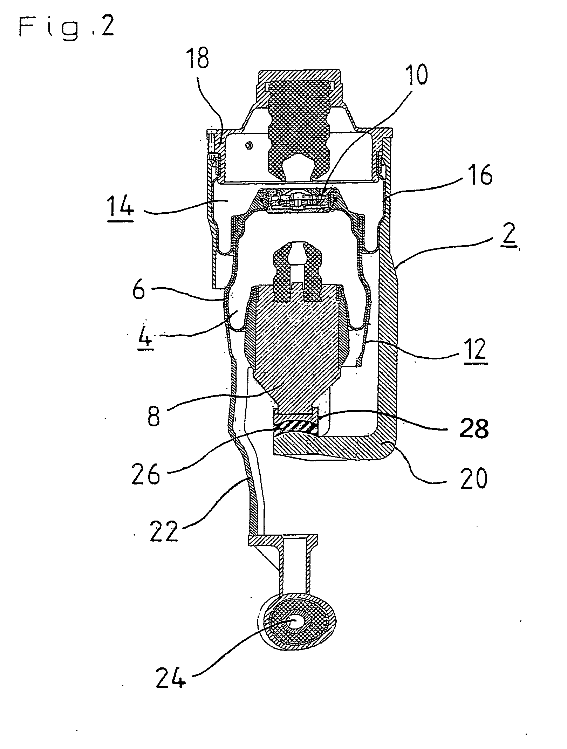

Figur 2 zeigt ein Luftfederbein 2, das weitestgehend genauso aufgebaut ist wie das in der Figur 1 gezeigte Luftfederbein. Der einzige Unterschied ist darin zu sehen, dass zwischen dem Taumelgelenk 26 und dem unteren Ende des ersten Abrollbalges 8 ein Adapter 28 angeordnet ist. Der Adapter 28 ist an der Fläche, die dem unteren Ende des ersten Abrollkolbens 8 zugewandt ist, an diesen angepasst. Die Fläche des Adapters 28, die dem Taumelgelenk 26 zugewandt ist, ist an dieses angepasst, so dass der Adapter 28 passgenau zwischen dem ersten Abrollkolben 8 und dem Taumelgelenk 26 liegt. Der Adapter 28 ermöglicht es, einen ersten Abrollkolben zu verwenden, dessen Form nicht an das Taumelgelenk 26 angepasst ist.

### Bezugszeichenliste

### (Teil der Beschreibung)

- 2: Luftfederbein
- 4: erste Luftfeder
- 6: Balg
- 8: erster Abrollkolben
- 10: erster Deckel
- 12: Glocke
- 14: zweite Luftfeder
- 16: Balg
- 18: zweiter Deckel
- 20: erstes Verbindungselement
- 22: zweites Verbindungselement
- 24: Befestigungsauge
- 26: Taumelgelenk
- 28: Adapter

## Patentansprüche

1. Luftfederbein (2) für ein Kraftfahrzeug, das folgende Bestandteile enthält:
- eine erste Luftfeder (4) mit einem Balg (6), der auf einer ersten Abrollkontur in Form eines ersten Abrollkolbens (8) abrollt und der an einem ersten Deckel (10) befestigt ist,
- eine zweite Luftfeder (14) mit einem Balg (16), der auf einer zweiten Abrollkontur abrollt und der an einem zweiten Deckel (18) befestigt ist,
- ein erstes Verbindungselement (20), auf dem sich der erste Abrollkolben (8) abstützt und über das der zweite Deckel (18) mit dem ersten Abrollkolben (8) verbunden ist
- ein zweites Verbindungselement (22), über das der erste Deckel (10) mit einer Radaufhängung eines Kraftfahrzeuges verbindbar ist
**dadurch gekennzeichnet, dass** sich der erste Abrollkolben (8) über ein Taumelgelenk (26) auf dem ersten Verbindungselement (20) abstützt, und dass das Taumelgelenk (26) in den ersten Abrollkolben (8) integriert ist.

2. Luftfederbein (2) nach Anspruch 1, **dadurch gekennzeichnet, dass** das erste Verbindungselement (20) und das zweite Verbindungselement (22) außerhalb der beiden Luftfedern (4,14) verlaufen.

3. Luftfederbein (2) nach einem der Ansprüche 1 bis 2, **dadurch gekennzeichnet, dass** das Taumelgelenk (26) ein Elastomerbauteil enthält.

4. Luftfederbein (2) nach einem der Ansprüche 1 bis 3, **dadurch gekennzeichnet, dass** das Taumelgelenk (26) als Scheibe ausgebildet ist.

5. Luftfederbein (2) nach Anspruch 4, **dadurch gekennzeichnet, dass** die Scheibe die Form einer Kugelkalotte aufweist, deren Ausbuchtung dem ersten Verbindungselement (20) zugewandt ist.

6. Luftfederbein (2) nach einem der Ansprüche 1 bis 5, **dadurch gekennzeichnet, dass** zwischen dem Taumelgelenk (26) und dem ersten Abrollkolben (8) ein Adapter (28) angeordnet ist.

7. Luftfederbein (2) nach einem der Ansprüche 1 bis 6, **dadurch gekennzeichnet, dass** die zweite Abrollkontur durch die erste Luftfeder (4) vorgegeben ist.

8. Luftfederbein (2) nach einem der Ansprüche 1 bis 7, **dadurch gekennzeichnet, dass** der Innenraum der ersten Luftfeder (4) mit dem Innenraum der zweiten Luftfeder (14) über ein in zwei Richtungen durchströmbares Drosselorgan (10) miteinander in Verbindung steht.

9. Luftfederbein (2) nach einem der Ansprüche 1 bis 8, **dadurch gekennzeichnet, dass** das Taumelgelenk (26) zwischen dem ersten Abrollkolben (8) und dem ersten Verbindungselement (20) ohne weitere Befestigung eingelegt ist.

## Claims

1. Air suspension strut (2) for a motor vehicle, which air suspension strut comprises the following constituent parts:
- a first air spring (4) with a bellows (6) which rolls on a first rolling contour in the form of a first rolling piston (8) and which is fastened to a first cover (10),
- a second air spring (14) with a bellows (16) which rolls on a second rolling contour and which is fastened to a second cover (18),
- a first connecting element (20) on which the first rolling piston (8) is supported and via which the second cover (18) is connected to the first rolling piston (8),
- a second connecting element (22) via which the first cover (10) can be connected to a wheel suspension of a motor vehicle,
**characterized in that** the first rolling piston (8) is supported on the first connecting element (20) via a wobble joint (26), and **in that** the wobble joint (26) is integrated into the first rolling piston (8).

2. Air suspension strut (2) according to Claim 1, **characterized in that** the first connecting element (20) and the second connecting element (22) run outside the two air springs (4, 14).

3. Air suspension strut (2) according to one of Claims 1 and 2, **characterized in that** the wobble joint (26) comprises an elastomer component.

4. Air suspension strut (2) according to one of Claims 1 to 3, **characterized in that** the wobble joint (26) is formed as a disc.

5. Air suspension strut (2) according to Claim 4, **characterized in that** the disc has the shape of a spherical cap, the bulge of which faces towards the first connecting element (20).

6. Air suspension strut (2) according to one of Claims 1 to 5, **characterized in that** an adapter (28) is arranged between the wobble joint (26) and the first rolling piston (8).

7. Air suspension strut (2) according to one of Claims 1 to 6, **characterized in that** the second rolling contour is predefined by the first air spring (4).

8. Air suspension strut (2) according to one of Claims 1 to 7, **characterized in that** the interior space of the first air spring (4) is connected to the interior space of the second air spring (14) via a throttle element (10) through which flow can pass in two directions.

9. Air suspension strut (2) according to one of Claims 1 to 8, **characterized in that** the wobble joint (26) is placed between the first rolling piston (8) and the first connecting element (20) with no further fastening.

## Revendications

1. Jambe à ressort pneumatique (2) pour un véhicule automobile, comprenant les constituants suivantes :
- un premier ressort pneumatique (4) avec un soufflet (6), qui roule sur un premier contour de déroulage en forme de premier piston de déroulage (8) et qui est fixé sur un premier couvercle (10),
- un deuxième ressort pneumatique (14) avec un soufflet (16) qui roule sur un deuxième contour de déroulage et qui est fixé sur un deuxième couvercle (18),
- un premier élément de connexion (20) sur lequel s'appuie le premier piston de déroulage (8), et par le biais duquel le deuxième couvercle (18) est connecté au premier piston de déroulage (8),
- un deuxième élément de connexion (22) par le biais duquel le premier couvercle (10) peut être connecté à une suspension de roue d'un véhicule automobile,
**caractérisée en ce que** le premier piston de déroulage (8) s'appuie par le biais d'un joint oscillant (26) sur le premier élément de connexion (20), et **en ce que** le joint oscillant (26) est intégré dans le premier piston de déroulage (8).

2. Jambe à ressort pneumatique (2) selon la revendication 1, **caractérisée en ce que** le premier élément de connexion (20) et le deuxième élément de connexion (22) s'étendent en dehors des deux ressorts pneumatiques (4, 14).

3. Jambe à ressort pneumatique (2) selon l'une quelconque des revendications 1 à 2, **caractérisée en ce que** le joint oscillant (26) contient un composant en élastomère.

4. Jambe à ressort pneumatique (2) selon l'une quelconque des revendications 1 à 3, **caractérisée en ce que** le joint oscillant (26) est réalisé sous forme de disque.

5. Jambe à ressort pneumatique (2) selon la revendication 4, **caractérisée en ce que** le disque présente la forme d'une calotte sphérique, dont le bombement est tourné vers le premier élément de connexion (20).

6. Jambe à ressort pneumatique (2) selon l'une quelconque des revendications 1 à 5, **caractérisée en ce qu'**un adaptateur (28) est disposé entre le joint oscillant (26) et le premier piston de déroulage (8).

7. Jambe à ressort pneumatique (2) selon l'une quelconque des revendications 1 à 6, **caractérisée en ce que** le deuxième contour de déroulage est prédéfini par le premier ressort pneumatique (4).

8. Jambe à ressort pneumatique (2) selon l'une quelconque des revendications 1 à 7, **caractérisée en ce que** l'espace interne du premier ressort pneumatique (4) est en liaison avec l'espace interne du deuxième ressort pneumatique (14) par le biais d'un organe d'étranglement (10) pouvant être parcouru par l'écoulement dans deux directions.

9. Jambe à ressort pneumatique (2) selon l'une quelconque des revendications 1 à 8, **caractérisée en ce que** le joint oscillant (26) est inséré entre le premier piston de déroulage (8) et le premier élément de connexion (20) sans autre fixation supplémentaire.
